(19) Europäisches Patentamt / European Patent Office / Office européen des brevets

(11) **EP 1 510 795 B1**

(12) **FASCICULE DE BREVET EUROPEEN**

(45) Date de publication et mention
de la délivrance du brevet:
**31.05.2017 Bulletin 2017/22**

(51) Int Cl.:
*F02C 9/00* *(2006.01)*　　*F02C 9/16* *(2006.01)*
*F02C 9/28* *(2006.01)*　　*G01F 1/86* *(2006.01)*
*F02C 9/26* *(2006.01)*

(21) Numéro de dépôt: **04292044.7**

(22) Date de dépôt: **12.08.2004**

(54) **Dispositif pour l'estimation du débit massique de carburant**

Vorrichtung zur Abschätzung des Massendurchflusses von Kraftstoff

Device for estimating fuel mass flow rate

(84) Etats contractants désignés:
**DE FR GB SE**

(30) Priorité: **22.08.2003 FR 0310106**

(43) Date de publication de la demande:
**02.03.2005 Bulletin 2005/09**

(73) Titulaire: **SNECMA**
**75015 Paris (FR)**

(72) Inventeur: **Vary, Florian**
**77000 Melun (FR)**

(74) Mandataire: **de Kernier, Gabriel et al**
**Cabinet Netter**
**Conseils en Propriété Industrielle**
**36, avenue Hoche**
**75008 Paris (FR)**

(56) Documents cités:
**US-A- 4 593 523　　US-A- 5 303 541**
**US-A- 6 148 601**

**EP 1 510 795 B1**

**Description**

L'invention concerne le domaine des turboréacteur, et plus particulièrement celui de l'estimation du débit massique de carburant injecté dans la chambre de combustion du turboréacteur.

Dans le cas de turboréacteurs d'avion, il est crucial de déterminer avec précision le débit massique de carburant injecté dans la chambre de combustion du turboréacteur. En effet, l'estimation du débit massique permet de calculer le débit massique de carburant réduit ainsi que la richesse du mélange air/kérosène. Plus cette estimation du débit massique est précise, plus le calcul du débit massique de carburant réduit ainsi que la richesse du mélange air/kérosène est précis. Les butées d'accélération et de décélération étant généralement exprimées en fonction du débit massique de carburant réduit, le manque de précision sur le calcul de ce débit diminue les performances du moteur. De plus, le contrôle des émissions polluantes nécessitant la connaissance de la richesse du mélange air/kérosène de la chambre, le manque de précision sur le calcul de cette richesse diminue la qualité de ce contrôle. De manière générale, l'estimation du débit massique de carburant injecté permet le contrôle du moteur.

Actuellement, il est connu d'estimer de deux façon différentes le débit massique de carburant injecté dans la chambre de combustion. Le débit massique de carburant injecté peut être mesuré à partir de la mesure de la position du doseur carburant et d'une loi associée. Toutefois, la mesure étant un signal aléatoire, le débit massique calculé est bruité. De plus, la loi liant la position du doseur avec le débit massique qui le traverse comprend des incertitudes paramétriques. Ces incertitudes sont dues notamment à la variabilité de la densité et de la viscosité du carburant, aux tolérances de fabrication sur les caractéristiques géométriques du doseur, à la précision de l'asservissement hydro-mécanique du différentiel de pression à travers le doseur et à celle de l'asservissement électro-mécanique de la position du tiroir du doseur.

Le document US-A-5 303 541 divulgue un système de contrôle du carburant pour un turboréacteur. Le débit massique de carburant injecté peut être également mesuré à partir de la mesure du débit massique par un débimètre classique. Toutefois, la dynamique d'un débitmètre massique est trop médiocre pour qu'il soit utilisé pour le contrôle du moteur.

La présente invention vient améliorer la situation.

L'invention concerne un dispositif et un procédé de détermination d'une mesure de débit massique de fluide pour chambre de combustion comprenant un doseur de fluide et un moyen de mesure de la position du doseur dite mesurée selon les revendications 1 à 18

Les figures ci-après illustrent de manière non limitative des modes de réalisation de l'invention :

- la figure 1 représente schématiquement un turboréacteur en coupe selon son axe de rotation,

- la figure 2 représente le dispositif de mesure du débit massique selon l'invention,

- la figure 3 représente le dispositif d'hybridation compris dans le dispositif de mesure de la figure 2,

- la figure 4 représente partiellement le dispositif d'hybridation de la figure 2 selon une première variante de réalisation de l'invention,

- la figure 5 représente le dispositif d'hybridation de la figure 2 selon une deuxième variante de réalisation selon l'invention,

- la figure 6 représente le procédé de détermination du débit massique du fluide selon l'invention.

L'annexe A comprend les différentes équations mathématiques utilisées par le dispositif selon l'invention ainsi que les notations et la significations des grandeurs d'état utilisées.

Les dessins et les annexes contiennent, pour l'essentiel, des éléments de caractère certain. Ils pourront donc non seulement servir à mieux faire comprendre la description, mais aussi contribuer à la définition de l'invention, le cas échéant.

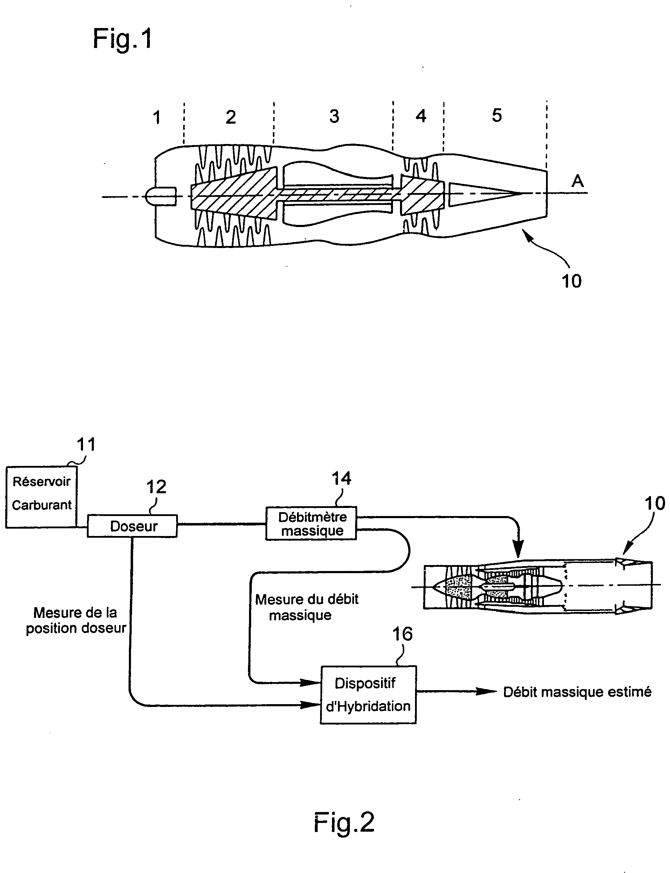

La figure 1 représente un turboréacteur en coupe selon son axe de rotation A. Les différentes parties du turboréacteur sont séparées par des traits tiretés. Le turboréacteur comprend une entrée d'air 1 suivie du compresseur 2 adapté pour comprimer l'air entré dans le compresseur, une chambre de combustion 3 dans laquelle est injecté du kérosène qui se mélange avec l'air comprimé sortant du compresseur, une turbine 4 et une tuyère 5. Un turboréacteur peut comprendre d'autres chambres de combustion, par exemple, une chambre de postcombustion non représentée. Le terme "chambre de combustion" sera employé de manière non limitative à un type de chambre de combustion ci-après.

Dans un tel turboréacteur, il est important de connaître le débit massique de carburant injecté dans la chambre de combustion. En effet, l'estimation du débit massique permet de calculer le débit massique de carburant réduit ainsi que la richesse du mélange air/kérosène. Plus cette estimation du débit massique est précise, plus le calcul du débit massique de carburant réduit ainsi que la richesse du mélange air/kérosène est précis. Les butées d'accélération et de décélération étant généralement exprimées en fonction du débit massique de carburant réduit, le manque de précision sur le calcul de ce débit diminue les performances du moteur. De plus, le contrôle des émissions polluantes nécessitant la connaissance de la richesse du mélange air/kérosène de la chambre, le manque de précision sur le calcul de cette richesse diminue la qualité de ce contrôle. De manière générale, l'estimation du débit massique de carburant injecté permet le contrôle du moteur.

Actuellement et comme indiqué précédemment, il est connu d'estimer de deux façon différentes le débit massique de carburant injecté dans la chambre de combustion. Toutefois, aucune de ces détermination du débit n'est satisfaisante en terme de précision ou de dynamique.

Selon l'invention, la figure 2 présente le dispositif de mesure du débit massique de fluide, en particulier du carburant dans le cas présent. Un réservoir 11 de carburant alimente la chambre de combustion du turboréacteur 10. Cette alimentation en carburant est contrôlée par un doseur 12 comprenant un tiroir. Le doseur comprend un moyen de mesure de la position de ce tiroir. Dans le reste de la description, la position du tiroir du doseur est aussi appelée la position du doseur. Un débitmètre massique 14 permet une mesure directe du débit massique du carburant avant son injection dans la chambre de combustion 2 du turboréacteur 10. La mesure de la position du doseur $X_{doseur}$ et la mesure directe du débit massique $WF_{débitmètre}$ sont reçues en entrée par le dispositif d'hybridation 16 selon l'invention permettant de déterminer le débit massique de carburant injecté dans la chambre de combustion de façon précise. La position du débitmètre massique 14 peut être soit en amont soit en aval du doseur 12 par rapport à la distribution de carburant dans la chambre de combustion.

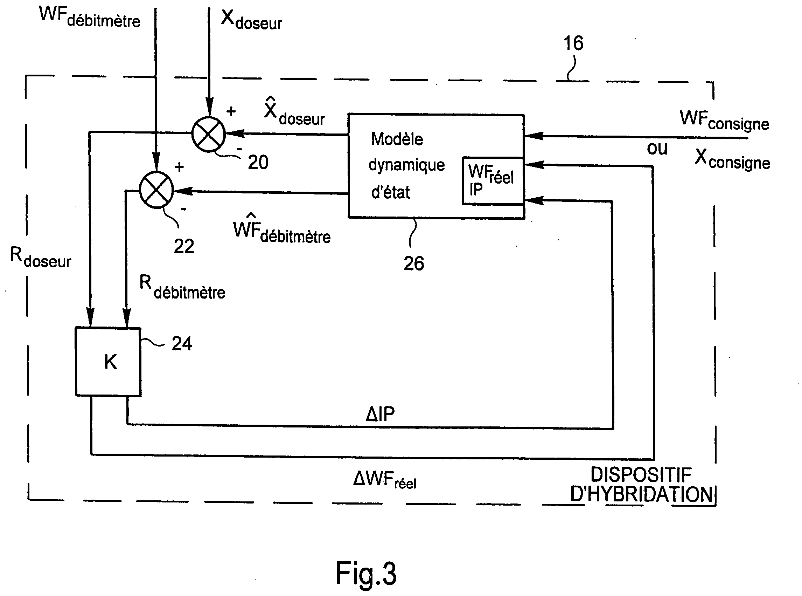

Le dispositif d'hybridation 16 du dispositif de mesure du débit massique du carburant est plus particulièrement détaillé sur la figure 3.

Ce dispositif d'hybridation 16 comprend une première entrée U (annexe A10) consistant en une valeur de consigne $WF_{consigne}$ du débit massique de carburant demandé ou $X_{consigne}$ de la position doseur demandée. Le dispositif d'hybridation comprend également un module de prédiction 26 permettant de déterminer, à partir de l'entrée U, une sortie Y (annexe A9) comprenant une position estimée du doseur $\hat{X}_{doseur}$ et un débit massique $\hat{W}F_{débitmètre}$ estimé. Cette détermination s'effectue par un modèle d'état dynamique comprenant comme variables d'état sous forme d'un vecteur d'état Z : le débit massique réel $WF_{réel}$ et un vecteur d'incertitudes paramétrique IP de dimension quelconque. Les incertitudes paramétriques comprennent celles inhérentes à la relation liant la position du doseur au débit massique qui le traverse. Ces incertitudes paramétriques sont introduites par les facteurs suivants :

- la variabilité de la densité et de la viscosité du carburant, essentiellement inhérents au processus de la distillation fractionnée du pétrole, mais également dépendant de la température,
- les tolérances de fabrication sur les caractéristiques géométriques des éléments du circuit carburant dont principalement celles du doseur,
- la précision et la qualité de l'asservissement hydro-mécanique du différentiel de pression à travers le doseur,
- la précision de l'asservissement électro-mécanique de la position du tiroir du doseur.

Le module de prédiction peut comprendre à titre d'exemple un modèle d'état dynamique comme indiqué en A11. Le module de prédiction permet ainsi de calculer par itération les sorties Y en fonction des variables d'état, elles-mêmes fonction des entrées U. Ce modèle peut être un modèle d'état linéaire du premier ordre dans lequel

- le vecteur de variables d'état Z à l'itération n+1 dépend du vecteur de variables d'état Z à l'itération n, du vecteur d'entrée U à l'itération n, de la matrice d'état F,
- le vecteur de sortie Y à l'itération n+1 dépend du vecteur de variables d'état Z à l'itération n, de la matrice de sortie H.

Plus généralement, le modèle d'état dynamique peut être stationnaire lorsque les matrices F et H sont fixes ou instationnaire lorsque les matrices F et H dépendent des entrées comme WFconsigne ou Xconsigne dans l'exemple A11.

La mesure de la position du doseur $X_{doseur}$ et la mesure du débit massique $WF_{débitmètre}$, effectuées respectivement par le moyen de mesure de la position du doseur et le débitmètre massique, sont reçues par le dispositif d'hybridation en entrée. Un calculateur de résidus 20, 22 permet de déterminer la différence entre le débit massique du carburant mesuré $WF_{débitmètre}$ et le débit massique du fluide estimé $\hat{W}F_{débitmètre}$, cette différence étant appelée résidu du débitmètre $R_{débitmètre}$ tel qu'indiqué en annexe A2. Le calculateur de résidu permet également de déterminer un deuxième résidu entre la position du doseur mesurée $X_{doseur}$ et la position du doseur estimée $\hat{X}_{doseur}$, cette différence étant appelée résidu du doseur tel qu'indiqué en annexe A1. Le vecteur résidu est alors tel que défini en A6.

Le dispositif d'hybridation comprend également un module de correction 24 qui permet le calcul, à partir du vecteur résidu R tel qu'indiqué en annexe A3, du vecteur de correction C composé de la correction $\Delta WF_{réel}$ et de la correction ΔIP, cette dernière correspondant à un vecteur de correction du vecteur des incertitudes paramétriques IP. Ce vecteur de correction C est le résultat de la multiplication d'une matrice de gains de correction K dont les coefficients peuvent être variables ou fixes. Le calcul de ce vecteur de correction C selon l'annexe A3 permet la correction des variables d'état correspondant au débit massique réel $WF_{réel}$ et aux incertitudes paramétriques IP (vecteur des incertitudes paramétriques) telle que définie en annexes A4 et A5. Ainsi, avant chaque calcul itératif d'estimation par le module de prédiction 26, les variables d'états sont corrigées à l'aide du vecteur de correction C.

De manière avantageuse, la combinaison des mesures faites à partir du doseur et du débitmètre massique et le traitement de telles mesures par le dispositif d'hybridation permet d'obtenir des évaluations de débit massique précises et selon une dynamique adaptée au contrôle du moteur. Avantageusement, ce traitement des mesures est effectué de manière itérative de manière à affiner le résultat du débit massique obtenu.

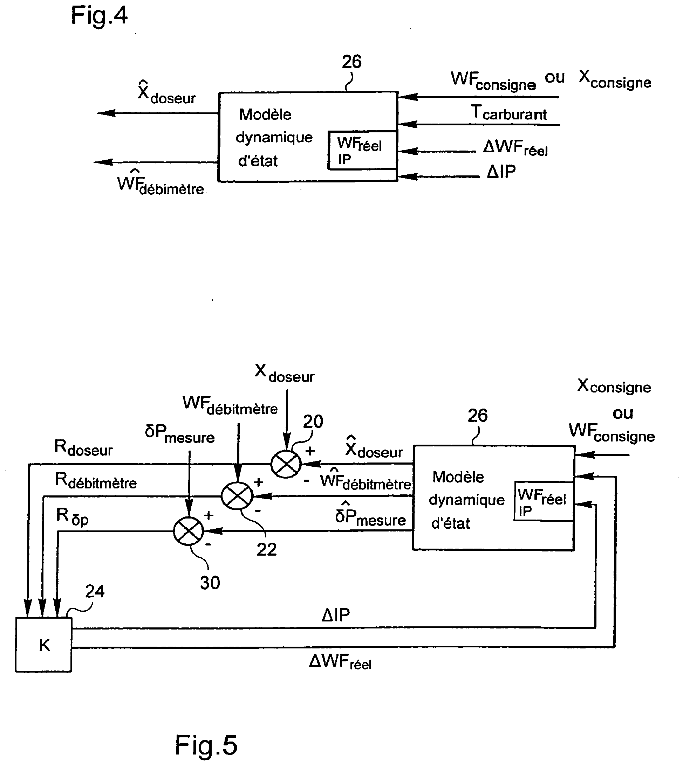

D'autres réalisations possibles selon l'invention sont détaillées sur les figures 4 et 5. La figure 4 représente en détail l'amélioration du module de prédiction 26 de la figure 3. Ce module de prédiction présente une entrée supplémentaire correspondant à une mesure de la température du carburant. Cette mesure est effectuée par un moyen de mesure de température connu. La connaissance de la température du carburant désensibilise les incertitudes paramétriques IP utilisées par le module de prédiction 26 vis à vis des variations de cette même température.

La figure 5 représente le dispositif d'hybridation de la figure 3 selon un troisième mode de réalisation. Les sorties du module de prédiction 26 comprennent, en plus de la position estimée du doseur et du débit massique estimé, la valeur estimée du différentiel de pression à travers le doseur de carburant $\wedge\delta P_{mesure}$. L'obtention de cette valeur estimée par le module de prédiction 26 est détaillé ci-après. Une mesure du différentiel de pression à travers le doseur de fluide est également effectuée puis transmise au dispositif d'hybridation 16. Le calculateur de résidu 20, 22, 30 permet de déterminer la différence entre le différentiel de pression mesurée et le différentiel de pression estimée, cette différence étant appelée le résidu du différentiel de pression $R_{\delta P}$. Le vecteur résidu R comprend, en plus des composantes définies en A6, le résidu du différentiel de pression $R_{\delta P}$. Les corrections $\Delta WF_{réel}$, $\Delta IP$ sont calculées après multiplication de la matrice de gain de correction K et du vecteur de résidu R.

Bien évidemment, la réalisation de la figure 3 peut comprendre les variantes de la figure 4 et de la figure 5.

Afin d'obtenir une estimation optimale du débit massique de carburant, la matrice de gain de correction K peut également correspondre aux gains d'un filtre de Kalman. Les coefficients de cette matrice sont alors variables à chaque nouvelle itération n de l'évaluation du débit massique. En annexe A7, il est détaillé le filtre de Kalman récursif. La signification des variables du filtre est indiquée en annexe. Il est notamment utilisé les matrices de covariance du bruit d'état Q et de covariance du bruit de mesure R. En A8, le vecteur d'état Z du filtre comprend comme composantes les variables d'état du module de prédiction 26. En A9, le vecteur Y des sorties estimées du module de prédiction 26 comprend comme composantes la position estimée du doseur ($\wedge X_{doseur}$) et un débit massique $\wedge WF_{débitmètre}$ estimé. Dans une réalisation de l'invention, elle peut également comprendre la valeur estimée du différentiel de pression à travers le doseur de carburant $\wedge\delta P_{mesure}$. En A10, le vecteur d'entrée U comprend la valeur de consigne du débit massique demandée $WF_{consigne}$ ou de la position du doseur demandée $X_{doseur}$.

Il est connu que la précision d'un débitmètre massique est fonction du débit qui le traverse. En général, cette précision est plus élevée à fort débit qu'à faible débit. Ainsi, le module de correction 24 est propre à adapter directement ou indirectement les coefficients de la matrice de gain de correction K en fonction de la valeur du débit massique mesurée par le débitmètre massique. Ainsi, le module de correction est apte à modifier les coefficients de la matrice de gain de correction K afin de donner un importance relative variable entre la mesure de la position du doseur $X_{doseur}$ et la mesure du débitmètre massique $WF_{débitmètre}$ dans le calcul de l'estimation du débit massique réel $WF_{réel}$. Il est ainsi possible de déterminer une adaptation continue du module de correction 24 sur toute la plage de fonctionnement en débit de carburant. Cette adaptation du gain de K peut être réalisée par une loi ou par une modification des matrices de covariance Q et R.

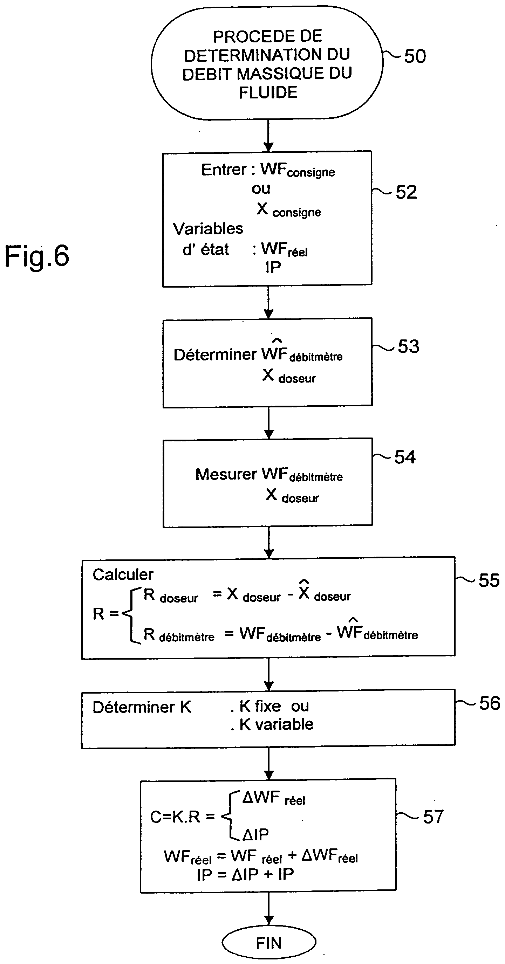

La figure 6 illustre le procédé de détermination du débit massique du carburant tel que réalisé par le dispositif illustré sur la figure 3.

A l'étape 52, la valeur de consigne du débit massique du carburant demandée ou la valeur de consigne de la position du doseur demandée est reçue en entrée du dispositif d'hybridation. Le module de prédiction utilise un modèle basé sur les variables d'état de débit massique réel et d'incertitudes paramétriques pour déterminer, à partir de la valeur de consigne du débit massique demandée $WF_{consigne}$ ou de la position du doseur demandée $X_{doseur}$, la position estimée du doseur $\wedge X_{doseur}$ et le débit massique estimé $\wedge WF_{débitmètre}$ à l'étape 53. A l'étape 54, les valeurs du débit massique du carburant et de la position du doseur sont mesurées et reçues en entrée par le dispositif d'hybridation de manière à calculer, à l'étape 55, le vecteur résidu comprenant le résidu du doseur et le résidu du débitmètre. A l'étape 56, la matrice de gain de correction K est déterminée. Les coefficients de celle-ci peuvent être fixes ou variables. Dans le dernier cas, K peut être calculée par une loi fonction du débit massique de consigne WFconsigne, mesuré WFdébitmètre ou réel WFréel ou fonction de la position du doseur de consigne Xconsigne, la position du doseur mesurée Xdoseur ou la position du doseur réelle Xréel. K peut également être calculée à partir des relations récursives A7. A partir de ce vecteur de résidu et de la matrice de gain de correction K, le vecteur de correction C est calculé à l'étape 57, ces corrections étant appliquées au débit massique réel WF$_{réel}$ et aux incertitudes paramétriques IP à l'étape 57. Le procédé peut alors recommencer à l'étape 52 de manière à affiner la détermination du débit massique réel WF$_{réel}$. Ainsi, au fur et à mesure des itérations de ce procédé, toutes les données variables sont recalculées et affinées, par exemple les incertitudes paramétriques sont affinées et permettent de déterminer plus précisément les valeurs estimées du débit massique du carburant et de la position du doseur, valeurs comparées aux valeurs mesurées telles que décrites précédemment.

L'invention ne se limite pas non plus aux modes de réalisation décrits ci-avant, seulement à titre d'exemple, mais elle englobe toutes les variantes que pourra envisager l'homme de l'art dans le cadre des revendications ci-après.

Annexe A

$$\text{A1-} \quad R_{doseur} = X_{doseur} - \hat{X}_{doseur}$$

$$\text{A2-} \quad R_{débitmètre} = WF_{débitmètre} - \hat{WF}_{débitmètre}$$

$$\text{A3-} \quad C = K \times R \qquad C = \begin{bmatrix} \Delta WF_{réel} \\ \Delta IP \end{bmatrix} \qquad R = \begin{bmatrix} R_{doseur} \\ R_{débitmètre} \end{bmatrix}$$

$$\text{A4-} \quad WF_{réel} = WF_{réel} + \Delta WF_{réel}$$

$$\text{A5-} \quad IP = IP + \Delta IP$$

$$\text{A6-} \quad R = \begin{bmatrix} R_{doseur} = X_{doseur} - \hat{X}_{doseur} \\ R_{débitmètre} = WF_{débitmètre} - \hat{WF}_{débitmètre} \end{bmatrix}$$

A7-

$$P_{n+1/n} = F.P_{n/n}.F^T + Q$$
$$K_{n+1} = P_{n+1/n}.H^T(H.P_{n+1/n}.H^T + R)^{-1}$$
$$P_{n+1/n+1} = P_{n+1/n} - K_{n+1}.H.P_{n+1/n}$$

$$\text{A8-} \quad Z = \begin{bmatrix} WFréel \\ IP \end{bmatrix}$$

$$\text{A9-} \quad Y = \begin{bmatrix} \hat{WF}\,débitmètre \\ \hat{X}\,doseur \end{bmatrix}$$

A10- $U = [WFconsigne \quad ou \quad Xconsigne]$

A11-
$$Z_{n+1} = F.Z_n + U_n$$
$$Y_{n+1} = H.Z_n$$

A12- <u>Notations</u>

| | |
|---|---|
| Xconsigne: | Position doseur demandée |
| WFconsigne : | Débit massique de carburant demandé |
| WFréel : | Débit massique réellement délivré par le système de dosage |
| WFdébitmètre : | Débit massique mesuré par le débitmètre |
| ^WFdébitmètre : | Débit massique estimé |
| ΔWFréel : | Correction du débit massique réel |
| Xdoseur : | Position mesurée du tiroir du doseur |
| ^Xdoseur | Position estimée du tiroir du doseur |
| Rdébitmètre : | Résidu du débit massique |
| Rdoseur : | Résidu de la position du tiroir du doseur |
| IP : | Vecteur des incertitudes paramétriques |
| ΔIP : | Vecteur correction du vecteur des incertitudes paramétriques |
| K : | Matrice gain de correction |
| Z : | vecteur d'état du filtre |
| Y : | vecteur des sorties estimées |
| U : | vecteur des entrées de consigne |
| H : | matrice de sortie |
| F : | matrice d'état |
| Q : | matrice de covariance du bruit d'état |
| V : | bruit d'état |
| R : | matrice de covariance du bruit de mesure |
| W : | bruit de mesure |

**Revendications**

1. Dispositif de détermination d'une mesure de débit massique de fluide pour chambre de combustion comprenant un doseur de fluide et un moyen de mesure de la position du doseur dite mesurée,
   **caractérisé en ce qu'**il comprend

   - un débitmètre massique (14) pour mesurer un débit massique de fluide dit mesuré,
   - un dispositif d'hybridation (16) apte à déterminer un débit massique de fluide réel comprenant:

     - une première entrée comprenant une valeur de consigne (WFconsigne) du débit massique demandé ou une valeur de consigne (Xconsigne) de la position du doseur demandée,
     - un module de prédiction (26) apte à déterminer, à partir de la première entrée et de variables d'état comprenant le débit massique réel (WFréel) et des incertitudes paramétriques (IP), des valeurs estimées comprenant la position estimée du doseur (^Xdoseur) et le débit massique (^WFdébimètre) estimé,
     - une deuxième entrée comprenant la position du doseur mesurée (Xdoseur) et le débit massique de fluide mesuré (WFdébimètre),
     - un calculateur de résidus (30, 22, 20) apte à déterminer un premier résidu (Rdoseur) entre la position du doseur mesurée et la position du doseur estimée et un deuxième résidu (Rdébimètre) entre le débit massique de fluide mesuré et le débit massique de fluide estimé,
     - un module de correction (24) apte à déterminer, à partir des premier et deuxième résidus, des corrections propres à être appliquées par le module de prédiction sur les variables d'état (WFréel, IP).

**2.** Dispositif selon la revendication 1, **caractérisé en ce que** le module de prédiction (26) comprend un modèle dynamique à état liant la première entrée avec les variables d'état et les valeurs estimées.

**3.** Dispositif selon l'une des revendications 1 et 2, **caractérisé en ce que** le module de correction (24) comprend une matrice de gain de correction dont les coefficients sont fixes.

**4.** Dispositif selon l'une des revendications 1 et 2, **caractérisé en ce que** le module de correction (24) comprend une matrice de gain de correction dont les coefficients sont variables.

**5.** Dispositif selon la revendication 4, **caractérisé en ce que** les coefficients sont déterminés par une loi mathématique dépendante du débit massique de fluide ou de la position du doseur.

**6.** Dispositif selon la revendication 4, **caractérisé en ce que** la matrice de gain de correction est une matrice de gain du filtre de Kalman (K) déterminée dynamiquement.

**7.** Dispositif selon la revendication 6, **caractérisé en ce que** la matrice de gain du filtre de Kalman est déterminée dynamiquement par l'utilisation de matrices relatives au bruit soumise à une adaptation continue de leurs coefficients.

**8.** Dispositif selon l'une des revendications précédentes, **caractérisé en ce que** la première entrée comprend en outre une valeur mesurée de la température du fluide (Tcarburant).

**9.** Dispositif selon l'une des revendications précédentes, **caractérisé en ce que** la deuxième entrée comprend une valeur mesurée d'un différentiel de pression à travers le doseur de fluide ($^\delta$Pmesure), les valeurs estimées comprennent une valeur estimée de ce différentiel de pression ($\delta$Pmesure), le calculateur de résidus est apte à déterminer un troisième résidu ($R_{\delta P}$), entre la valeur mesurée et la valeur estimée du différentiel de pression, le module de correction est apte à déterminer, à partir des premier, deuxième et troisième résidus, des corrections propres à être appliquées par le module de prédiction sur les variables d'état.

**10.** Procédé de détermination d'une mesure de débit massique de fluide pour chambre de combustion comprenant un doseur de fluide et un moyen de mesure de la position du doseur dite mesurée, le procédé étant **caractérisé en ce qu'**il comprend les étapes consistant à

a- entrer une valeur de consigne (WFconsigne) du débit massique demandé ou une valeur de consigne (Xconsigne) de la position du doseur demandée, et des variables d'état comprenant le débit massique réel (WFréel) et des incertitudes paramétriques (IP),

b- déterminer, à partir de l'étape a-, des valeurs estimées comprenant la position estimée du doseur de fluide (^Xdoseur) et le débit massique (^WFdébimètre) estimé,

c- mesurer le débit massique de fluide (WFdébimètre) à partir d'un débitmètre massique et la position du doseur de fluide (Xdoseur),

d- calculer un premier résidu (Rdoseur) entre la position du doseur mesurée et la position du doseur estimée et un deuxième résidu (Rdébimètre) entre le débit massique de fluide mesuré et le débit massique de fluide estimé,

e- calculer, à partir des premier et deuxième résidus, des corrections et appliquer ces dernières aux variables d'état (Wfréel, IP).

**11.** Procédé selon la revendication 10, **caractérisé en ce que** l'étape b- consiste à utiliser un modèle dynamique à état liant la valeur de consigne avec les variables d'état et les valeurs estimées.

**12.** Procédé selon l'une des revendications 10 et 11, **caractérisé en ce que** le calcul de l'étape e- consiste à utiliser une matrice de gain de correction dont les coefficients sont fixes.

**13.** Procédé selon l'une des revendications 10 et 11, **caractérisé en ce que** le calcul de l'étape e- consiste à utiliser une matrice de gain de correction dont les coefficients sont variables.

**14.** Procédé selon la revendication 13, **caractérisé en ce que** l'étape e- consiste à déterminer les coefficients par une loi mathématique dépendante du débit massique de fluide ou de la position du doseur.

**15.** Procédé selon la revendication 13, **caractérisé en ce que** la matrice de gain de correction de l'étape e- est une matrice de gain du filtre de Kalman (K) déterminée dynamiquement.

**16.** Procédé selon la revendication 15, **caractérisé en ce que** la matrice de gain du filtre de Kalman de l'étape e- est déterminée dynamiquement par l'utilisation de matrices relatives au bruit soumise à une adaptation continue de leurs coefficients.

**17.** Procédé selon l'une des revendications 10 à 16, **caractérisé en ce que** l'étape a-comprend en outre d'entrer une valeur mesurée de la température du fluide (Tcarburant).

**18.** Procédé selon l'une des revendications 10 à 17, **caractérisé en ce que** l'étape b-comprend en outre de déterminer une valeur estimée d'un différentiel de pression à travers le doseur de fluide ($^\wedge\delta$Pmesure), l'étape c- comprend en outre de mesurer ce différentiel de pression ($\delta$Pmesure), l'étape d- comprend en outre de calculer un troisième résidu ($R_{\delta P}$) entre la valeur mesurée et la valeur estimée du différentiel de pression, l'étape e- comprend en outre de calculer, à partir des premier et deuxième résidus, des corrections et d'appliquer ces dernières aux variables d'état.

## Patentansprüche

**1.** Vorrichtung zur Bestimmung eines Fluid-Massendurchflussmaßes für eine Verbrennungskammer umfassend einen Fluid-Dosierer und eine Messeinrichtung für die zu messende Position des Dosierers, **dadurch gekennzeichnet, dass** die Vorrichtung umfasst

- einen Massendurchflussmesser (14), um den zu messenden Fluid-Massendurchfluss zu messen,
- eine Hybridisationsvorrichtung (16), die in der Lage ist, einen tatsächlichen Fluidmassendurchfluss zu bestimmen, und umfasst:

- eine erste Eingabe, die einen Sollwert (WFconsigne) des abgefragten Massendurchflusses oder einen Sollwert (Xconsigne) der abgefragten Position des Dosierers umfasst,
- ein Vorhersagemodul (26), das in der Lage ist, aus der ersten Eingabe und Zustandsvariablen, die den tatsächlichen Massendurchfluss (WFréel) und parametrische Unsicherheiten (IP) umfassen, Schätzwerte zu bestimmen, welche die geschätzte Position ($^\wedge$Xdoseur) des Dosierers und den geschätzten Massendurchfluss ($^\wedge$WFdébitmètre) umfassen,
- eine zweite Eingabe, welche die gemessene Position (Xdoseur) des Dosierers und den gemessenen Fluid-Massendurchfluss (WFdébitmètre) umfasst,
- einen Resteberechner (30, 22, 20), der in der Lage ist, einen ersten Rest (Rdoseur) zwischen der gemessenen Position des Dosierers und der geschätzten Position des Dosierers und einen zweiten Rest (Rdebitmetre) zwischen dem gemessenen Fluid-Massendurchfluss und dem geschätzten Fluid-Massendurchfluss zu bestimmen,
- ein Korrekturmodul (24), das in der Lage ist, aus dem ersten und zweiten Rest Korrekturen zu bestimmen, die sich dazu eignen, vom Vorhersagemodul auf die Zustandsvariablen (WFréel, IP) angewendet zu werden.

**2.** Vorrichtung nach Anspruch 1, **dadurch gekennzeichnet, dass** das Vorhersagemodul (26) ein dynamisches Zustandsmodell umfasst, das imstande ist, die erste Eingabe mit den Zustandsvariablen und den Schätzwerten zu verknüpfen.

**3.** Vorrichtung nach einem der Ansprüche 1 und 2, **dadurch gekennzeichnet, dass** das Korrekturmodul (24) eine Korrekturverstärkungsmatrix umfasst, deren Koeffizienten feststehend sind.

**4.** Vorrichtung nach einem der Ansprüche 1 und 2, **dadurch gekennzeichnet, dass** das Korrekturmodul (24) eine Korrekturverstärkungsmatrix umfasst, deren Koeffizienten variabel sind.

**5.** Vorrichtung nach Anspruch 4, **dadurch gekennzeichnet, dass** die Koeffizienten durch ein mathematisches Gesetz in Abhängigkeit vom Fluid-Massendurchfluss oder von der Position des Dosierers bestimmt werden.

**6.** Vorrichtung nach Anspruch 4, **dadurch gekennzeichnet, dass** die Korrekturverstärkungsmatrix eine dynamisch bestimmte Verstärkungsmatrix des Kalman-Filters (K) ist.

**7.** Vorrichtung nach Anspruch 6, **dadurch gekennzeichnet, dass** die Verstärkungsmatrix des Kalman-Filters (K) dynamisch durch die Verwendung von sich auf Rauschen beziehende Matrizen bestimmt wird, und einer fortgesetzten Anpassung ihrer Koeffizienten unterliegt.

8. Vorrichtung nach einem der vorhergehenden Ansprüche, **dadurch gekennzeichnet, dass** die erste Eingabe darüber hinaus einen Messwert (Tcarburant) der Temperatur des Fluids umfasst.

9. Vorrichtung nach einem der vorhergehenden Ansprüche, **dadurch gekennzeichnet, dass** die zweite Eingabe einen Messwert eines im Fluid-Dosierer herrschenden Druckdifferentials ($^\delta$Pmesure) umfasst, wobei die Schätzwerte einen Schätzwert dieses Druckdifferentials ($\delta$Pmesure) umfassen, der Resteberechner in der Lage ist, einen dritten Rest ($R_{\delta P}$) zwischen dem Messwert und dem Schätzwert des Druckdifferentials zu bestimmen, das Korrekturmodul in der Lage ist, aus dem ersten, zweiten und dritten Rest Korrekturen zu bestimmen, die sich dazu eignen, vom Vorhersagemodul auf die Zustandsvariablen angewendet zu werden.

10. Verfahren zur Bestimmung eines Fluid-Massendurchflussmaßes für eine Verbrennungskammer, die einen Fluid-Dosierer und eine Messeinrichtung für die zu messende Position des Dosierers umfasst, wobei das Verfahren **dadurch gekennzeichnet ist, dass** es die Schritte umfasst, die darin bestehen:

a- einen Sollwert (WFconsigne) des abgefragten Massendurchflusses oder einen Sollwert (Xconsigne) der abgefragten Position des Dosierers und Zustandsvariable einzugeben, die den tatsächlichen Massendurchfluss (WFreel) und parametrische Unsicherheiten (IP) umfassen,
b- aus dem Schritt a- Schätzwerte zu bestimmen, welche die geschätzte Position (^Xdoseur) des Dosierers und den geschätzten Massendurchfluss (^WFdébitmètre) umfassen,
c- den Fluid-Massendurchfluss (WFdebitmetre) aus einem Massendurchfluss und der Position des Fluid-Dosierers zu messen,
d- einen ersten Rest (Rdoseur) zwischen der gemessenen Position des Dosierers und der geschätzten Position (Xdoseur) des Dosierers und einen zweiten Rest (Rdebitmetre) zwischen dem gemessenen Fluid-Massendurchfluss und dem geschätzten Fluid-Massendurchfluss zu berechnen,
e- aus dem ersten und zweiten Rest Korrekturen zu berechnen und Letztere auf Zustandsvariablen (Wfreel, IP) anzuwenden.

11. Verfahren nach Anspruch 10, **dadurch gekennzeichnet, dass** der Schritt b-darin besteht, ein dynamisches Zustandsmodell zu verwenden, das imstande ist, den Sollwert mit den Zustandsvariablen und den Schätzwerten zu verknüpfen.

12. Verfahren nach einem der Ansprüche 10 und 11, **dadurch gekennzeichnet, dass** die Berechnung des Schritts e-darin besteht, eine Korrekturverstärkungsmatrix zu verwenden, deren Koeffizienten feststehend sind.

13. Verfahren nach einem der Ansprüche 10 und 11, **dadurch gekennzeichnet, dass** die Berechnung des Schritts e-darin besteht, eine Korrekturverstärkungsmatrix zu verwenden, deren Koeffizienten variabel sind.

14. Verfahren nach Anspruch 13, **dadurch gekennzeichnet, dass** der Schritt e-darin besteht, die Koeffizienten durch ein mathematisches Gesetz in Abhängigkeit vom Fluid-Massendurchfluss oder von der Position des Dosierers zu bestimmen.

15. Verfahren nach Anspruch 13, **dadurch gekennzeichnet, dass** die Korrekturverstärkungsmatrix des Schritts e- eine dynamisch bestimmte Verstärkungsmatrix des Kalman-Filters (K) ist.

16. Verfahren nach Anspruch 15, **dadurch gekennzeichnet, dass** die Verstärkungsmatrix des Kalman-Filters des Schritts e- dynamisch durch die Verwendung von sich auf Rauschen beziehende Matrizen bestimmt wird, und einer fortgesetzten Anpassung ihrer Koeffizienten unterliegt.

17. Verfahren nach einem der Ansprüche 10 bis 16, **dadurch gekennzeichnet, dass** der Schritt a- darüber hinaus umfasst, einen Messwert (Tcarburant) der Temperatur des Fluids einzugeben.

18. Verfahren nach einem der Ansprüche 10 bis 17, **dadurch gekennzeichnet, dass** der Schritt b- darüber hinaus umfasst, einen Schätzwert eines im Fluid-Dosierer herrschenden Druckdifferentials ($^\delta$Pmesure) zu bestimmen, der Schritt c- darüber hinaus umfasst, dieses Druckdifferential ($\delta$Pmesure) zu messen, der Schritt d- darüber hinaus umfasst, einen dritten Rest ($R_{\delta}P$) zwischen dem Messwert und dem Schätzwert des Druckdifferentials zu berechnen, der Schritt e-darüber hinaus umfasst, aus dem ersten und zweiten Rest Korrekturen zu berechnen und diese Letzteren auf die Zustandsvariablen anzuwenden.

**Claims**

1. Device for determining a measurement of mass fluid flow for a combustion chamber comprising a fluid metering device and a means of measuring the position of metering device known as the measured position, **characterised in that** it comprises:

 - a mass flow meter (14) for measuring a mass flow of fluid known as the measured flow,
 - a hybridisation device (16) suitable for determining an actual mass flow of fluid comprising:

  - a first input comprising a set-point value (WFconsigne) of the mass flow sought or a set-point value (Xconsigne) of the position of the metering device sought,
  - a prediction unit (26) capable of determining, from the first input and variables of state comprising the actual mass flow (WFréel) and parametric uncertainties (IP), estimated values comprising the estimated position of the metering device (^Xdoseur) and the estimated mass flow (^WFdébitmètre),
  - a second input comprising the measured position of the metering device (Xdoseur) and the measured fluid mass flow (WFdébitmètre),
  - a calculator of residues (30, 22, 20) capable of determining a first residue (Rdoseur) between the measured position of the metering device and the estimated position of the metering device and a second residue (Rdébitmètre) between the measured fluid mass flow and the estimated fluid mass flow,
  - a correction unit (24) capable of determining from the first and second residues corrections capable of being applied by the prediction unit to the variables of state (WFréel, IP).

2. Device according to claim 1, **characterised in that** the prediction unit (26) comprises a dynamic model at the state linking the first input to the variables of state and estimated values.

3. Device according to either of claims 1 and 2, **characterised in that** the correction unit (24) comprises a correction gain matrix whose coefficients are fixed.

4. Device according to either of claims 1 and 2, **characterised in that** the correction unit (24) comprises a correction gain matrix whose coefficients are variable.

5. Device according to claim 4, **characterised in that** the coefficients are determined by a mathematical law dependent on the mass flow of fluid or on the position of the metering device.

6. Device according to claim 4, **characterised in that** the correction gain matrix is a gain matrix of the Kalman filter (K), determined dynamically.

7. Device according to claim 6, **characterised in that** the gain matrix of the Kalman filter is determined dynamically by the use of matrices relating to the interference, submitted to continuous adaptation of their coefficients.

8. Device according to any one of the preceding claims, **characterised in that** the first input further comprises a measured value of the temperature of the fluid (Tcarburant).

9. Device according to any one of the preceding claims, **characterised in that** the second input comprises a measured value of a pressure differential through the fluid metering device (^δPmesure), the estimated values comprise an estimated value of this pressure differential (δPmesure), the residue calculator is capable of determining a third residue ($R_{δP}$), between the measured value and the estimated value of the pressure differential, and the correction unit is capable of determining, from the first, second and third residues, corrections suitable for application by the prediction unit to the variables of state.

10. Process of determining a measurement of mass flow of a fluid for a combustion chamber comprising a fluid metering device and a means of measuring the position of metering device known as the measured position, the process being **characterised in that** it comprises the stages consisting in:

a- entering a set-point value (WFconsigne) of the mass flow sought or a set-point value (Xconsigne) of the position of the metering device sought, and variables of state comprising the actual mass flow (WFréel) and parametric uncertainties (IP),

b- determine from stage a- estimated values comprising the estimated position of the fluid metering device (^Xdoseur) and the estimated mass flow (^WFdébitmètre),

c- measure the mass flow of fluid (WFdébitmètre) from a mass flow meter and the position of the fluid metering device (Xdébitmètre),

d- calculate a first residue (Rdoseur) between the measured position of the metering device and the estimated position of the metering device and a second residue (Rdébitmètre) between the measured mass flow of fluid and the estimated mass flow of fluid,

e- calculate corrections from the first and second residues and apply these to the variables of state (WFréel, IP).

11. Process according to claim 10, **characterised in that** the stage b- consists in using a dynamic model in the state linking the set-point value to the variables of state and the estimated values.

12. Process according to either of claims 10 and 11, **characterised in that** the calculation of the stage e- consists in using a correction gain matrix whose coefficients are fixed.

13. Process according to either of claims 10 and 11, **characterised in that** the calculation of the stage e- consists in using a correction gain matrix whose coefficients are variable.

14. Process according to claim 13, **characterised in that** the stage e- consists in determining the coefficients by a mathematical law dependent on the mass flow of fluid or on the position of the metering device.

15. Process according to claim 13, **characterised in that** the correction gain matrix of the stage e- is a gain matrix of the Kalman filter (K), determined dynamically.

16. Process according to claim 15, **characterised in that** the gain matrix of the Kalman filter of the stage e- is determined dynamically by the use of matrices relating to the interference, this use being submitted to continuous adaptation of their coefficients.

17. Process according to any one of claims 10 to 16, **characterised in that** the stage a-further comprises entering a measured value of the temperature of the fluid (Tcarburant).

18. Process according to any one of claims 10 to 17, **characterised in that** the stage b-further comprises determining an estimated value of a pressure differential through the fluid metering device (^δPmesure), the stage c- further comprises measuring this pressure differential (δPmesure), the stage d- further comprises calculating a third residue ($R_{\delta P}$) between the measured value and the estimated value of the pressure differential, and the stage e- further comprises calculating corrections from the first and second residues and applying these corrections to the variables of state.

# Fig.1

# Fig.2

Fig.3

Fig.4

Fig.5

Fig.6

PROCEDE DE DETERMINATION DU DEBIT MASSIQUE DU FLUIDE — 50

Entrer : $WF_{consigne}$
ou
$X_{consigne}$
Variables d'état : $WF_{réel}$
IP
— 52

Déterminer $\widehat{WF}_{débitmètre}$
$X_{doseur}$
— 53

Mesurer $WF_{débitmètre}$
$X_{doseur}$
— 54

Calculer
$$R = \begin{cases} R_{doseur} = X_{doseur} - \widehat{X}_{doseur} \\ R_{débitmètre} = WF_{débitmètre} - \widehat{WF}_{débitmètre} \end{cases}$$
— 55

Déterminer K . K fixe ou
. K variable
— 56

$$C = K.R = \begin{cases} \Delta WF_{réel} \\ \Delta IP \end{cases}$$
$WF_{réel} = WF_{réel} + \Delta WF_{réel}$
$IP = \Delta IP + IP$
— 57

FIN

**EP 1 510 795 B1**

**Documents brevets cités dans la description**

*   US 5303541 A